# FASCICULE DE BREVET EUROPEEN

(11) **EP 2 398 750 B1**
(45) Date de publication et mention de la délivrance du brevet: **19.06.2019**
(21) Numéro de dépôt: 10705434.8
(22) Date de dépôt: 16.02.2010
(51) Int. Cl.: C04B 28/02, C04B 40/00, C04B 103/10, C04B 111/00

(54) **LIANT HYDRAULIQUE RAPIDE POUR PIECES ET OUVRAGES EN BETON CONTENANT UN SEL DE CALCIUM**
SCHNELLE HYDRAULISCHE BINDEMITTEL FÜR TEILE UND KONSTRUKTIONEN AUS BETON, ENTHALTEND EIN CALCIUMSALZ
FAST HYDRAULIC BINDER FOR PARTS AND CONSTRUCTIONS MADE OF CONCRETE CONTAINING A CALCIUM SALT

(30) Priorité: 17.02.2009 FR 0900706
(43) Date de publication de la demande: 28.12.2011
(73) Titulaire: Lafarge, 75116 Paris (FR); Chryso, 92440 Issy-Les-Moulineaux (FR)
(72) Inventeur: SABIO, Serge, F-38540 Saint Just Chaleyssin (FR); RINALDI, David, F-01630 Saint Jean de Gonville (FR); LAYE, Jean-Michel, F-38690 Burcin (FR); SGRO, Isabelle, 38300 BOURGON JALLIEU (FR); NARANJO, Horacio, F-38200 Jardin (FR); PELLERIN, Bruno, F-77210 Avon (FR); BOUSTINGORRY, Pascal, F-91650 Breuillet (FR)
(74) Mandataire: Lavoix
(86) Numéro de dépôt international: PCT/IB2010/050694
(87) Numéro de publication internationale: WO 2010/095097

(56) Documents cités:
- FR-A1- 2 827 594
- US-A- 5 911 819
- US-A- 6 008 275
- US-A1- 2003 199 616
- US-A1- 2006 207 479

## Description

L'invention a pour objet des compositions de liant hydraulique rapide comprenant un sel de calcium, utilisées pour la fabrication de pièces et ouvrages en béton.

Par liants hydrauliques rapides pour mortier ou béton on entend des liants hydrauliques à prise et durcissement rapides. Les bétons utilisant de tels liants dans leurs compositions, une fois mis en oeuvre, acquièrent des caractéristiques mécaniques importantes à court terme. Ils ont de préférence une résistance en compression RC d'au moins 1 MPa à 4 heures pour les bétons fluides et d'au moins 1 MPa à 5 heures pour les bétons autoplaçants (ou autocompactants), et d'au moins 12 MPa à 24 h.

Ces bétons sont des bétons fluides ou autoplaçants (ou autocompactants) et ont une durée d'ouvrabilité d'1 heure minimum à 2 heures maximum.

L'ouvrabilité des bétons fluides est mesurée par la hauteur d'affaissement au cône d'Abrams -ou valeur de slump- (selon la norme française NF P 18-451, de décembre 1981) et on estime qu'un béton est fluide lorsque cet affaissement est d'au moins 150 mm, de préférence au moins 180 mm.

L'ouvrabilité des bétons autoplaçants (ou autocompactants) est généralement mesurée à partir du "slumpflow", ou étalement, selon le mode opératoire décrit dans le document intitulé "Specification and Guidelines for Self Compacting Concrete, EFNARC, February 2002, p. 19-23"; la valeur de l'étalement est supérieure à 650 mm pour les bétons autocompactants (et en général inférieure à 800 mm).

L'invention concerne les bétons, et plus particulièrement les bétons fluides ou autoplaçants (ou autocompactants), destinés à la réalisation de pièces et ouvrages, qu'il s'agisse de pièces préfabriquées en usine, ou des réalisations sur chantiers, comme par exemple des voiles de béton, dalles, etc..

La demande de brevet EP 1 893548 déposée au nom des demanderesses décrit un liant hydraulique rapide comprenant du ciment, au moins un superplastifiant, du nitrite de calcium et au moins un dérivé formique. Le dérivé formique peut être sous forme aldéhyde et correspond, par exemple, au formaldéhyde.

Bien qu'un tel liant hydraulique rapide peut, de façon tout à fait satisfaisante, être utilisé pour la réalisation d'un béton fluide ou autoplaçant (ou autocompactant), il présente l'inconvénient de mettre en oeuvre un dérivé formique, qui, au moins dans le cas du formaldéhyde, est un composé toxique.

Il est connu de US2003/199616 un adjuvant comprennant un mélange de 2 polymères de type polycarboxylate de polyoxyde d'alkylène (PCP) c'est-à-dire des copolymères peigne à chaîne principale polycarboxylate portant des chaînes latérales greffées de polyoxyde d'alkylène. Il est également connu de FR2827594 l'utilisation d'un dispersant de type polycarboxylique pour des compositions aqueuses de sulfate de calcium anhydre. Cependant, ces documents ne décrivent pas de composition présentant une action fluidifiante qui croît au moins temporairement dans le temps en milieu basique.

Il existe donc un besoin d'un procédé de fabrication de pièces et ouvrages en béton ayant une longue durée de maintien d'ouvrabilité, conduisant à une acquisition rapide des résistances mécaniques à court terme même à des températures inférieures à 10°C,

et permettant ainsi d'augmenter la cadence de réutilisation des coffrages, le béton utilisant un liant hydraulique rapide comprenant un sel de calcium et ne comprenant pas de dérivé formique toxique. Dans ce but, la présente invention propose un mélange accélérateur pour liant hydraulique tel que défini par la revendication 1, comprenant au moins un premier superplastifiant, un sel de calcium hydrosoluble et au moins un second superplastifiant différent du premier superplastifiant et comprenant une chaîne principale et des groupes pendants reliés à la chaîne principale adaptés à se séparer de la chaîne principale en milieu basique, d'où il résulte que le second superplastifiant a une action fluidifiante qui croît au moins temporairement dans le temps en milieu basique.

La présente invention propose également un liant hydraulique, tel que défini par la revendication 8, comprenant du ciment et ledit mélange accélérateur.

L'invention offre des avantages déterminants, puisqu'elle permet la fabrication d'un béton fluide ou autocompactant (autoplaçant) à partir d'un liant hydraulique ne comprenant pas de dérivé formique toxique.

En particulier, de façon avantageuse, la présente invention permet la fabrication de compositions de béton faciles à mettre en oeuvre et à coût faible. Ces compositions ont une rhéologie adaptée, impliquant préférentiellement une durée d'ouvrabilité (après gâchage) d'une heure minimum et d'une heure et demie à deux heures maximum et un durcissement très rapide.

De façon avantageuse, la présente invention permet la fabrication d'un béton fluide, notamment un béton fluide présentant à 90 minutes un affaissement d'au moins 15 cm, de préférence au moins 18 cm.

De façon avantageuse, la présente invention permet la fabrication d'un béton autoplaçant, notamment un béton autoplaçant présentant à 90 minutes un étalement supérieur à 650 mm.

Enfin l'invention a pour avantage de pouvoir être mise en oeuvre dans toutes industries, notamment l'industrie du bâtiment, l'industrie chimique (adjuvantiers) et dans l'ensemble des marchés de la construction (bâtiment, génie civil ou usine de préfabrication), de l'industrie de la construction ou de l'industrie cimentière. En particulier, le liant hydraulique rapide selon l'invention peut être utilisé pour la réalisation et/ou la réparation de chaussée de route. De plus, le liant hydraulique rapide selon l'invention peut être utilisé pour le décoffrage accéléré de pièces en béton, notamment pour la réalisation de voiles mettant en oeuvre un décoffrage rapide et pour la réalisation de poutres préfabriquées.

D'autres avantages et caractéristiques de l'invention apparaîtront clairement à la lecture de la description et des exemples donnés à titre purement illustratifs et non limitatifs qui vont suivre.

L'invention concerne un mélange accélérateur pour liant hydraulique tel que défini par la revendication 1, comprenant au moins un premier superplastifiant, un sel de calcium hydrosoluble, et au moins un second superplastifiant, différent du premier superplastifiant et comprenant une chaîne principale et des groupes pendants reliés à la chaîne principale adaptés à se séparer de la chaîne principale en milieu basique, d'où il résulte que le second superplastifiant a une action fluidifiante qui croît au moins temporairement dans le temps en milieu basique.

L'invention a encore pour objet un un liant hydraulique, tel que défini par la revendication 8, comprenant du ciment et ledit mélange accélérateur.

L'invention a encore pour objet un béton ou mortier humide comprenant un liant hydraulique rapide selon l'invention gâché avec de l'eau.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique peut être un ciment selon la norme EN 197-1.

Par le terme « béton », on entend un mélange de liants hydrauliques, de granulats, d'eau, éventuellement d'additifs, et éventuellement d'additions minérales comme par exemple le béton hautes performances, le béton très hautes performances, le béton autoplaçant, le béton autonivelant, le béton autocompactant, le béton fibré, le béton prêt à l'emploi ou le béton coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers, dans ce cas précis le béton comprend un mélange de liant hydraulique, de sable, d'eau et éventuellement d'additifs et éventuellement d'additions minérales. Le terme « béton » selon l'invention désigne indistinctement le béton frais ou le béton durci.

Selon l'invention le terme « granulats » désigne des graviers, des gravillons et/ou du sable.

Selon l'invention l'expression « additions minérales» désigne les laitiers (tels que définis dans la norme « Ciment » NF EN 197-1 paragraphe 5.2.2), les laitiers d'aciérie, les matériaux pouzzolaniques (tels que définis dans la norme « Ciment » NF EN 197-1 paragraphe 5.2.3), les cendres volantes (telles que définies dans la norme « Ciment » NF EN 197-1 paragraphe 5.2.4), les schistes calcinés (tels que définis dans la norme « Ciment » NF EN 197-1 paragraphe 5.2.5), les calcaires (tels que définis dans la norme « Ciment » NF EN 197-1 paragraphe 5.2.6) ou encore les fumées de silices (telles que définies dans la norme « Ciment » NF EN 197-1 paragraphe 5.2.7) ou leurs mélanges.

Par l'expression « ciment Portland », on entend selon l'invention un ciment de type CEM I, CEM II, CEM III, CEM IV ou CEM V selon la norme « Ciment » NF EN 197-1.

Par l'expression « réducteur d'eau », on entend un additif qui sert à diminuer la quantité d'eau nécessaire à la réalisation d'un béton. A titre d'exemple, les réducteurs d'eau à base d'acides lignosulfoniques, d'oxacides carboxyliques ou d'hydrates de carbone traités peuvent réduire d'environ 10 % à 15 % les besoins en eau pour la réalisation d'un béton.

Par l'expression « superplastifiant » ou « superfluidifiant » ou « super réducteur d'eau », on entend un réducteur d'eau qui permet de réduire de plus de 20 %, par exemple d'environ 30 % la quantité d'eau nécessaire à la réalisation d'un béton. Un superplastifiant présente une action fluidifiante dans la mesure où, pour une même quantité d'eau, l'ouvrabilité du béton est augmentée en présence du superplastifiant.

Par l'expression « superplastifiant à efficacité immédiate », on entend un superplastifiant comprenant des chaînes latérales reliées à une chaîne principale, moins de 10 % des chaînes latérales se séparant de la chaîne principale en milieu basique à 20°C.

Par l'expression « superplastifiant à efficacité différée », on entend un superplastifiant comprenant des chaînes latérales reliées à une chaîne principale, au moins 10 % des chaînes latérales se séparant de la chaîne principale en milieu basique à 20°C.

Par l'expression « polymère hydrolysable », on entend un polymère dont la structure se modifie sous l'effet des ions hydroxyde (OH⁻) en générant des fonctions acide carboxylique COOH ou carboxylate COO⁻. Les fonctions chimiques hydrolysables sont en particulier, mais de façon non limitative, les anhydrides, les esters, les nitriles, les amides et les imides.

Par l'expression « monomère hydrolysable », on entend un monomère qui, une fois incorporé dans un polymère, apporte un caractère hydrolysable au polymère. A titre d'exemple, l'acrylamide et les esters de l'acide acrylique sont des monomères hydrolysables.

Par l'expression « polycarboxylate de polyoxyde d'alkylène », on entend désigner des copolymères en peigne à chaîne principale polycarboxylate portant des chaînes latérales greffées de polyoxyde d'alkylène. Ces polymères sont souvent appelés par l'abréviation PCP.

Par l'expression «taux d'ester » d'un polymère, on entend la proportion des unités monomère de la chaîne principale portant une fonction ester définie par la formule ci-dessous : 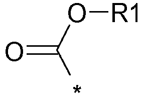 où R1 désigne un groupement comportant au moins un atome de carbone par lequel il est lié à l'atome d'oxygène de la fonction ester et * symbolise la chaîne principale. R1 peut notamment être un groupement alkyle ou un greffon de polyoxyde d'alkylène.

Le taux d'ester est exprimé en pourcentage molaire et il est calculé en divisant le nombre de fonctions ester sur la chaîne principale par le nombre total d'unités monomère sur la chaîne principale.

Selon un exemple de réalisation, le liant hydraulique rapide ne comprend pas de formaldéhyde. Il peut éventuellement comprendre un dérivé formique non toxique tel que le formiate de calcium. Selon un exemple de réalisation, le liant hydraulique rapide ne comprend pas de dérivé formique.

Selon un exemple de réalisation, le sel de calcium est le nitrite de calcium. Selon un autre exemple de réalisation, le sel de calcium est le nitrate de calcium ou un mélange de nitrite de calcium et de nitrate de calcium. Ce sel est présent dans la composition du mélange accélérateur en des quantités qui peuvent varier de 50 à 90 % en poids sec. En général, la quantité est telle que la quantité de sel de calcium dans le liant hydraulique final est comprise entre 0.5 et 10 %, de préférence entre 1.5 % et 5 % en poids sec par rapport au liant hydraulique final. De préférence, le sel de calcium est hydrosoluble. De préférence, le sel de calcium n'est pas un carbonate de calcium.

Le second superplastifiant est un superplastifiant dont l'action fluidifiante n'est pas constante dans le temps, mais croît au moins temporairement dans le temps en milieu basique. Le second superplastifiant est généralement appelé dispersant ou superplastifiant à efficacité différée (en anglais delayed efficiency dispersant ou DED). De préférence, le second superplastifiant n'a pas initialement d'action fluidifiante. Le second superplastifiant comprend au moins un polymère hydrolysable en milieu basique, tel que défini par la revendication 1. Lors de la fabrication d'un béton selon l'invention, la composition obtenue ayant un pH basique, des réactions d'hydrolyse se produisent qui conduisent à modification de la structure du polymère hydrolysable et à une modification des propriétés du polymère hydrolysable, à savoir une augmentation de l'action fluidifiante du polymère hydrolysable. Selon un exemple de réalisation, le polymère hydrolysable est du type polycarboxylate de polyoxyde d'alkylène.

De préférence, le superplastifiant comprend des chaînes latérales reliées à une chaîne principale, au moins 20 % des chaînes latérales se séparant de la chaîne principale en milieu basique à 20°C, encore plus préférentiellement au moins 30 % des chaînes latérales se séparant de la chaîne principale en milieu basique à 20°C.

Selon un exemple de réalisation, le polymère hydrolysable est obtenu par polymérisation radicalaire :
- d'au moins un monomère ionique ou ionisable du type phosphonique, sulfonique ou carboxylique. A titre d'exemple pour les monomères phosphoniques, ce monomère peut être notamment le phosphoéthyl méthacrylate, les monomères de la gamme Sipomer PAM commercialisés par la société Rhodia. A titre d'exemple pour les monomères sulfoniques, ce monomère peut être notamment l'acide vinyl sulfonique et ses sels, l'acide styrène sulfonique et ses sels, l'acide 2-acrylamido-2-methylpropane sulfonique et ses sels, l'acide allyoxyhydroxypropyle sulfonique et ses sels, l'acide méthallylsulfonique et ses sels. A titre d'exemple pour les monomères carboxyliques, ce monomère peut être notamment l'acide acrylique, l'acide méthacrylique, l'acide maléique, l'acide fumarique, l'acide itaconique, l'acide crotonique ;
- d'au moins un monomère de type (méth)acrylate de polyéthylène glycol (PEG), maléate de polyéthylène glycol, vinyl éther de polyéthylène glycol ou allyle de polyéthylène glycol, en particulier PEG méthyl éther (en position terminale), dont le poids moléculaire est compris par exemple entre 100 et 10000, de préférence entre 350 et 7000 et avantageusement entre 350 et 5000. Les monomères de type acrylate de PEG seront utilisés avantageusement dans cette invention du fait de leur caractère hydrolysable ; et
- d'éventuellement un ou plusieurs autres monomères hydrolysables ou non hydrolysables. Parmi les monomères hydrolysables, nous pouvons citer avantageusement l'acrylamide et ses dérivés, l'acrylonitrile et ses dérivés, les acrylates d'alkyle tel que l'acrylate d'éthyle, les acrylates d'hydroxyalkyle tels que l'hydroxyéthyl acrylate, les esters de vinyle d'acides carboxyliques tels que l'acétate de vinyle, les anhydrides carboxyliques copolymérisables tels que l'anhydride maléique ou l'anhydride méthacrylique, les monomères à fonctions imide tels que la maléimide et ses dérivés.

Les monomères hydrolysables représentent de 5 % à 95 % molaire de l'ensemble des monomères mis en oeuvre, de préférence de 10 % à 60 % molaire de l'ensemble des monomères mis en oeuvre. La mise en oeuvre de ces monomères se fait selon les conditions connues de l'homme de l'art, notamment décrites dans le brevet FR2892420.

Les mêmes structures peuvent être obtenues de manière équivalente par un procédé dit de post-estérification en faisant réagir des alcools ou des amines polyoxyalkylés sur un polymère présentant des fonctions carboxyliques pour permettre le greffage. Ce procédé de mise en oeuvre est décrit par exemple dans le brevet FR2776285 au nom de la société Chryso.

Un tel polymère hydrolysable peut, par exemple, être produit selon le procédé suivant. Matières premières employées :
- 120 g d'acide polyacrylique commercialisé par BASF sous la dénomination Sokalan CP10S. Sa masse molaire moyenne en poids est égale à 4000 Daltons. Il est dilué à 50 % dans l'eau ;
- 190 g d'un méthyl éther de polyéthylène glycol de masse molaire moyenne en poids égale à 350 Daltons ; et
- 0,60 g d'hydroxyde de lithium.

### Préparation du polymère hydrolysable :

Dans un réacteur en verre, équipé d'un système d'agitation, d'un dispositif de distillation et d'un système de mise sous vide partiel, on introduit les matières premières précitées, dans l'ordre suivant : l'acide polyacrylique, l'hydroxyde de lithium et le méthyl éther de polyéthylène glycol. Dès la fin de l'introduction du méthyl éther de polyéthylène glycol, on met le réacteur sous vide partiel (20 à 30 mm Hg) avec une couverture d'azote. Ensuite, on chauffe, vers 60-75°C : on obtient le début de distillation de l'eau apportée avec l'acide polyacrylique. Puis on monte la température à 165-175°C pour estérifier. Pendant la réaction d'estérification, on enlève l'eau formée. Après 9 heures à 165-175°C, on arrête la réaction. Pour ce faire, on refroidit le réacteur à une température de l'ordre de 80°C et on arrête la distillation sous vide puis on ajoute 3,2 g d'oléyl diéthanolamine (commercialisé sous la dénomination Noramox 02 par C. E. C. A.) et 3,2 g de tributylphosphate (antimousse). Enfin, on dilue le produit avec de l'eau pour obtenir un extrait sec de 30 % et on le neutralise avec de l'hydroxyde de sodium à pH égal à 7,1. Le polymère ainsi préparé est prêt à l'emploi. Dans la suite de la description, ce polymère est appelé PH. Son taux d'ester théorique est de 65. Son taux d'ester réel est déduit de la mesure de l'indice d'acide du polymère. L'indice d'acide de ce polymère est de 34 mg de KOH pour 100 g de polymère sec, ce qui correspond à un taux d'ester de 62.

Le dispersant à 30 % d'extrait sec est évalué par une mesure d'ouvrabilité sur mortier. La composition du mortier est la suivante :

| Composant | Masse (g) |
|---|---|
| Ciment CEM I 52,5 N Saint-Pierre La Cour | 624,9 |
| Filler Erbray | 412,1 |
| Sable AFNOR | 1350 |
| Sable Fulchiron | 587,7 |
| Eau | 375,1 |

L'étalement du mortier est mesuré selon le mode opératoire décrit dans le document "Spécification and Guidelines for Self Compacting Concrete, EFNARC, February 2002, p19-23". L'évolution de l'étalement au cours du temps est donnée par le tableau ci-dessous.

| Temps (min) | Etalement (mm) |
|---|---|
| 5 | 240 |
| 15 | 240 |
| 30 | 290 |
| 60 | 350 |
| 90 | 370 |
| 120 | 350 |

L'étalement constant aux temps courts, puis son augmentation montre bien que l'effet fluidifiant de ce polymère est décalée dans le temps.

Le second superplastifiant est présent dans la composition du mélange accélérateur en des quantités qui peuvent varier de 1 à 5 % en poids, pourcentages calculés à partir des extraits secs des constituants du mélange accélérateur. En général, la quantité est telle que la quantité du second superplastifiant, par rapport au sel de calcium, est comprise entre 1 et 10 % de la quantité de sel de calcium, de préférence entre 2 et 5 %. Par rapport au poids du liant hydraulique final, la quantité est telle que la quantité du second superplastifiant est comprise entre 0.01 et 1 %, de préférence entre 0.05 et 0.5 % en poids (pourcentage calculés à partir de l'extrait sec du premier superplastifiant) par rapport au poids du liant hydraulique rapide.

Le premier superplastifiant, ou superplastifiant à action immédiate, peut être tout superplastifiant utilisé de façon classique dans l'industrie, tels ceux définis dans la norme européenne EN 934-2. Le premier superplastifiant a une action fluidifiante immédiate qui tend à diminuer dans le temps tandis que le second superplastifiant a, dans un premier temps, peu ou pas d'action fluidifiante et a une action fluidifiante qui croît dans le temps.

On pourra utiliser, comme premier superplastifiant, des superplastifiants qui sont du type polyphosphonate polyox ou polysulfonate polyox ou mieux encore de type polycarboxylate de polyoxyde d'alkylène (également appelés polycarboxylate polyox ou PCP). Un exemple de premier superplastifiant est celui décrit dans les documents EP-A-537872, US20030127026 et US20040149174. Un exemple de premier superplastifiant est celui obtenu par polymérisation :
- d'au moins un monomère ionique du type phosphonique, sulfonique ou carboxylique, de préférence carboxylique et avantageusement de type (méth)acrylique ; et
- d'au moins un monomère de type (méth)acrylate de polyéthylène glycol (PEG), en particulier PEG méthyl éther (en position terminale), dont le poids moléculaire est compris par exemple entre 100 et 10000, de préférence entre 500 et 5000 et avantageusement entre 750 et 2000.

Le ratio molaire premier monomère/second monomère peut varier dans de larges mesures, par exemple 75:25 à 45:55, de préférence 65:35 à 55:45.

Il est possible d'utiliser un ou plusieurs tiers monomère(s), par exemple ceux choisis parmi :
(a) type acrylamide, par exemple N,N-diméthylacrylamide, 2,2'-diméthylamino (méth)acrylate ou ses sels, 2,2'-diméthylaminoalkyle (méth)acrylate ou ses sels avec le groupe alkyl et en particulier éthyle et propyle, et de façon générale tout monomère contenant une fonction de type amine ou amide ;
(b) type hydrophobe, par exemple (méth)acrylate d'alkyle en C1 à C18, en particulier méthyle ou éthyle.

La quantité de ce tiers monomère peut être comprise entre 5 et 25 % mol du total des monomères.

Un exemple particulier de premier superplastifiant utilisé dans l'invention est celui obtenu par polymérisation de 40 à 65 % d'acide (méth)acrylique, 25 à 40 % de (méth)acrylate PEG méthyl éther notamment de poids moléculaire compris entre 750 et 2000, et 5 à 25 % d'un monomère de type (a) ou (b), en particulier de type (a) et notamment 2,2'-diméthylaminoalkyle (méth)acrylate.

Le premier superplastifiant se présente sous une forme pouvant varier de la forme liquide à la forme solide, en passant par la forme cireuse.

Le premier superplastifiant est présent dans le mélange accélérateur en des quantités qui peuvent varier de 10 à 30 % en poids, pourcentages calculés à partir des extraits secs des constituants du mélange accélérateur. Le dosage du premier superplastifiant par rapport au liant hydraulique rapide est en général compris entre 0.1 et 5 % en poids (pourcentage calculés à partir de l'extrait sec du premier superplastifiant), de préférence entre 0.1 et 2 % en poids par rapport au poids du liant hydraulique rapide. Pour un premier superplastifiant liquide en général on aura une quantité telle qu'il sera présent à raison de préférence de 1 à 10, de préférence 2 à 7 l/m³ du mélange gâché de béton final.

Le liant hydraulique ou le mélange accélérateur peut contenir d'autres composants en plus des trois composés précités. On peut citer notamment les composés suivants, seuls ou en mélange :
(i) thiocyanate d'un métal alcalin ou alcalino-terreux ou d'aluminium;
(ii) halogénure ou halogénate d'un métal alcalin ou alcalino-terreux ou d'aluminium;
(iii) nitrate d'un métal alcalin ou alcalino-terreux ou d'aluminium;
(iv) amine, alcanolamine, polyhydroxyalkylamine;
(v) thiosulfate d'un métal alcalin ou alcalino-terreux ou d'aluminium;
(vi) hydroxyde d'un métal alcalin ou alcalino-terreux ou d'aluminium;
(vii) sel d'acide carboxylique d'un métal alcalin ou alcalino-terreux ou d'aluminium ;
(viii) étheroxyde;
(ix) sucres.

Lorsque le sel de calcium est le nitrite de calcium, on utilisera par exemple du thiocyanate et/ou du bromure de calcium, sodium ou potassium comme co-accélérateurs du nitrite de calcium.

La quantité de ces autres composés associés au mélange accélérateur peut représenter, par exemple jusqu'à 20 % en poids du sel de calcium.

Une telle association permet d'obtenir certains effets d'amélioration du compromis entre maîtrise de la rhéologie et acquisition rapide des performances.

Le liant hydraulique rapide destiné à former le béton humide comprend en général, par rapport au poids sec du liant :
- 99.5 à 90 % en poids de ciment Portland ;
- 0.5 à 10 % en poids du mélange accélérateur.

Avantageusement, le liant comprend :
- 99 à 95 % en poids de ciment Portland ;
- 1 à 5 % en poids du mélange accélérateur.

Le ciment Portland est classique et conforme aux familles décrites dans la norme européenne EN 197-1. On pourra utiliser par exemple un ciment CEM1 52.5 N ou R, CEM2 de type 32.5, 32.5 R, 42.5 ou 42.5 R. Le ciment peut être du type HRI (à Haute Résistance Initiale).

Avantageusement, le ciment Portland est un ciment, préférentiellement broyé à une finesse d'au moins 3000 cm²/g.

Le taux d'alcalins solubles sera de préférence inférieur à 1 %, avantageusement inférieur à 0.6 %, en poids exprimé en équivalent Na₂O. Avantageusement, la quantité de C4AF est inférieure à 8 % en poids, avantageusement inférieure à 4 %, et la quantité de C3S du clinker de départ est supérieure à 60 % en poids.

La quantité finale du mélange accélérateur dépend de la température d'utilisation du béton, du procédé exact de mise en oeuvre, du niveau de résistances à obtenir, etc. Par ailleurs, cette quantité est ajustée en fonction des quantités finales des différents composants dans le mélange de béton final.

Le béton pourra, en plus du mélange accélérateur, contenir d'autres types d'additifs couramment utilisés dans les bétons.

A titre d'exemple d'additifs susceptibles d'être utilisés, on peut citer : entraîneurs d'air, agents anti-mousse, inhibiteurs de corrosion, agents de réduction du retrait, fibres, pigments, agents de modification de la rhéologie, précurseurs d'hydratation, agents d'aide à la pompabilité, agents réducteurs d'alcalis réactions, agents de renforcement, composés hydrofugeants et leurs mélanges.

Les composés de la composition finale de béton peuvent être mis en oeuvre dans l'ordre suivant :
- selon un premier mode de réalisation, on ajoute la totalité des composants du mélange accélérateur dès le départ, lors du malaxage du béton, au niveau de la centrale à béton ; on gâche le ciment et le mélange accélérateur complet, à savoir sel de calcium, premier et second superplastifiants. Le malaxage au niveau de la centrale à béton pourra être fait soit dans un malaxeur fixe, soit dans un camion toupie lorsque celui-ci est utilisé directement comme malaxeur. L'invention vise donc le procédé dans lequel la totalité des composants est introduite dès le malaxage du liant rapide avec les granulats et l'eau.
- selon un second mode de réalisation, le sel de calcium sera ajouté en différé par rapport aux autres composants du mélange accélérateur, par exemple au niveau du camion-toupie, avant le départ de la centrale à béton, ou au cours du trajet centrale/chantier, ou au niveau du chantier juste avant la coulée. L'invention vise donc aussi le procédé dans lequel le sel de calcium est introduit postérieurement au malaxage des autres composants du liant hydraulique rapide avec les granulats et l'eau.

Selon le second mode de réalisation, les temps choisis pour cette introduction différée peuvent être de 10 à 90 minutes, de préférence 20 à 60 minutes après le gâchage avec les autres composants du mélange accélérateur, premier superplastifiant et/ou second superplastifiant. L'invention vise donc aussi le procédé dans lequel le sel de calcium est introduit de 10 à 90 minutes, de préférence de 20 à 60 minutes postérieurement.

On préfèrera le premier mode de réalisation, car les différents constituants (ciment, composants du mélange accélérateur) pourront alors tous être ajoutés et dosés précisément en une seule étape au niveau de la centrale à béton.

De façon générale, le rapport en poids d'eau efficace sur liant sec (rapport E/C) est compris en général entre 0,45 et 0,65.

La composition finale comprend des granulats classiques (sables, graviers et/ou cailloux). Préférentiellement, les constituants de la composition finale ont une taille inférieure ou égale à 20 mm, préférentiellement inférieure ou égale à 10 mm dans le cas des bétons autoplaçants (ou autocompactants). La composition peut ainsi être pompée facilement.

Le rapport en poids sec de granulats sur liant est compris en général entre 4 et 5.

Les compositions de béton selon l'invention sont faciles à mettre en oeuvre et sont d'un coût faible. Elles ont une rhéologie adaptée, impliquant préférentiellement une durée d'ouvrabilité (après gâchage) d'une heure minimum et d'une heure et demie à deux heures maximum et un durcissement très rapide. L'ouvrabilité de ces bétons selon l'invention est en général comprise entre 1 et 2 heures. Par durée d'ouvrabilité, on entend la durée de maintien de fluidité, qui correspond au délai de début de prise ; en général les valeurs de slump (béton fluide) sont d'au moins 15cm, de préférence au moins 18cm.

Le béton selon l'invention peut être un béton fluide, notamment un béton fluide présentant à 90 minutes un affaissement d'au moins 15 cm, de préférence au moins 18 cm. Il peut avoir une résistance en compression, dès 4h à compter de la fin du malaxage, de l'ordre de 1MPa au moins et de préférence au moins de 2MPa, et de au moins 12MPa à 24h, mesurée sur des éprouvettes cylindriques de dimension 16 cm x 32 cm.

Le béton selon l'invention peut aussi être un béton autoplaçant, notamment un béton autoplaçant présentant à 90 minutes un étalement supérieur à 650 mm. Il peut avoir une résistance en compression, dès 5h à compter de la fin du malaxage, de l'ordre de 1MPa au moins et de préférence au moins de 2MPa, et de au moins 12MPa à 24h, mesurée sur des éprouvettes cylindriques de dimension 16 cm x 32 cm.

Quant le malaxage est mis en oeuvre dans un camion-toupie, le temps est compté à partir de l'instant de l'introduction dans la toupie du dernier constituant de la composition de béton.

Ces deux propriétés de maintien de l'ouvrabilité et de fortes résistances à court terme permettent notamment de réaliser une composition de béton précurseur en centrale de béton et de la transporter ensuite sur un chantier par camion-toupie, la composition durcissant rapidement une fois mise en oeuvre. Ces qualités du liant permettent également de le pomper mécaniquement grâce à sa fluidité et de le couler ou pomper dans un coffrage en obtenant un durcissement rapide. On aura ainsi la possibilité de décoffrer puis recoffrer ensuite rapidement, afin de pouvoir procéder à un nouveau coulage du béton.

Le liant rapide pour bétons fluides ou autoplaçants (autocompactants) de l'invention est facilement pompable ou coulable, notamment sans vibration dans le cas des bétons autocompactants, ce qui le rend par exemple particulièrement adapté à la fabrication des voiles béton.

L'invention vise tout particulièrement la fabrication de voiles béton, par coulage et/ou pompage. L'invention est utile pour la fabrication de voiles béton à des températures extérieures comprises notamment entre -5°C et 30°C, en particulier inférieure à 10°C. On rappellera qu'un voile béton est défini en maçonnerie comme "toute paroi verticale et pleine en béton banché".

Par ailleurs, est décrit aussi un procédé de fabrication, notamment de voiles béton, par double décoffrage journalier à des températures inférieures ou égales à 10°C, en particulier faisant emploi du mélange accélérateur selon l'invention. En effet, l'invention selon un autre mode de réalisation, permet un tel procédé qui permet donc de couler deux voiles béton dans une journée, même à des températures faibles. En effet, on a maintenant constaté que les compositions selon l'invention, grâce à leurs propriétés de prise rapide même à faible température, permettent d'atteindre ce double décoffrage. Il a aussi été trouvé qu'il est possible, pour autant que les compositions soient rapides et maintiennent leur ouvrabilité, de rompre avec l'approche traditionnelle, et de procéder même à des températures faibles, à un double-décoffrage.

Des exemples, illustrant l'invention sans en limiter la portée, vont être décrits en relation avec les figures suivantes parmi lesquelles :
les figures 1 et 2 représentent, respectivement à deux instants différents, des courbes de niveau de l'étalement d'un mortier en fonction de concentrations de superplastifiants du mortier ;
les figures 3 et 4 représentent, respectivement à deux instants différents, des courbes de niveaux de la résistance à la compression d'un mortier en fonction de concentrations de superplastifiants du mortier ;
les figures 5 à 7 représentent l'évolution dans le temps de l'étalement et de la résistance à la compression de plusieurs exemples de réalisation de bétons selon la présente invention et d'un béton de référence ; et
les figures 8 et 9 représentent l'évolution dans le temps de l'étalement et de la résistance à la compression de plusieurs exemples de réalisation de mortiers selon la présente invention et d'un mortier de référence.

Dans ces exemples, les valeurs d'étalement sont mesurées selon le mode opératoire décrit dans le document "Spécification and Guidelines for Self Compacting Concrete, EFNARC, February 2002, p19-23" et les valeurs d'affaissement sont mesurées à l'aide d'un cône selon une échelle 1/2 par rapport au cône d'Abrams, dans le cas des mortiers de béton.

### 1) Evolution de l'étalement et de la résistance à compression du béton en fonction des concentrations de superplastifiants

On prépare un mortier selon la formulation suivante pour la réalisation d'un litre de mortier :

| | | |
|---|---|---|
| Ciment Portland CEM I | 550.9 g | |
| Filler calcaire Orgon | 78.7 g | |
| Sable 0-4 du site de Mauzac | 1454.5 g | |
| Eau totale | 255.9 g | |
| Nitrite de calcium | 49.5 g | (soit 2.5 % en poids d'extrait sec par rapport à la quantité de liant hydraulique) |

Le ciment utilisé est le ciment du Havre produit par la société Lafarge, qui est du type CEM1 52,5 selon la norme EN 197-1. Le premier superplastifiant, noté SP, est le produit commercialisé par la société BASF sous l'appellation Glenium 27. Le second superplastifiant correspond au polymère PH décrit précédemment.

Plus précisément, une série d'essais est réalisée en faisant varier la concentration du premier superplastifiant SP et la concentration du second superplastifiant PH, ces concentrations étant exprimées en pourcentage d'extrait sec par rapport à la quantité de liant hydraulique. Les résultats de ces essais sont rassemblés dans le tableau 1 suivant :

**Tableau 1**

| SP % | PH % | Etalement (mm) | | | | | | RC (MPa) | | | |
|---|---|---|---|---|---|---|---|---|---|---|---|
| | | 5 min | 15 min | 30 min | 60 min | 90 min | 120 min | 4 h | 5 h | 6 h | 24 h |
| 0.18 | 0.40 | 290 | 320 | 315 | 295 | 280 | 255 | 1.5 | 4.3 | 7.3 | 32.8 |
| 0.13 | 0.40 | 275 | 350 | 350 | 330 | 295 | 280 | 1.9 | 5.3 | 8.7 | 36.7 |
| 0.23 | 0.40 | 295 | 325 | 315 | 290 | 280 | 255 | 1.1 | 3.3 | 6.0 | 33.3 |
| 0.16 | 0.23 | 250 | 310 | 300 | 280 | 270 | 210 | 2.2 | 5.1 | 8.2 | 32.8 |
| 0.21 | 0.23 | 325 | 340 | 330 | 315 | 290 | 270 | 2.0 | 4.6 | 7.9 | 33 |
| 0.16 | 0.57 | 315 | 345 | 340 | 335 | 325 | 310 | 0.9 | 3.3 | 6.5 | 32.6 |
| 0.21 | 0.57 | 315 | 330 | 325 | 320 | 295 | 285 | 1.0 | 3.0 | 5.7 | 31.9 |

A partir des essais du tableau 1, on peut obtenir par simulation l'évolution de l'étalement à des instants donnés en fonction des concentrations SP et PH et l'évolution de la résistance à la compression RC à des instants donnés en fonction des concentrations SP et PH. La simulation peut être mise en oeuvre par l'intermédiaire du logiciel commercialisé par la société LPRAI sous l'appellation NemrodW en utilisant une modélisation du type plan à surface de réponse de Doehlert.

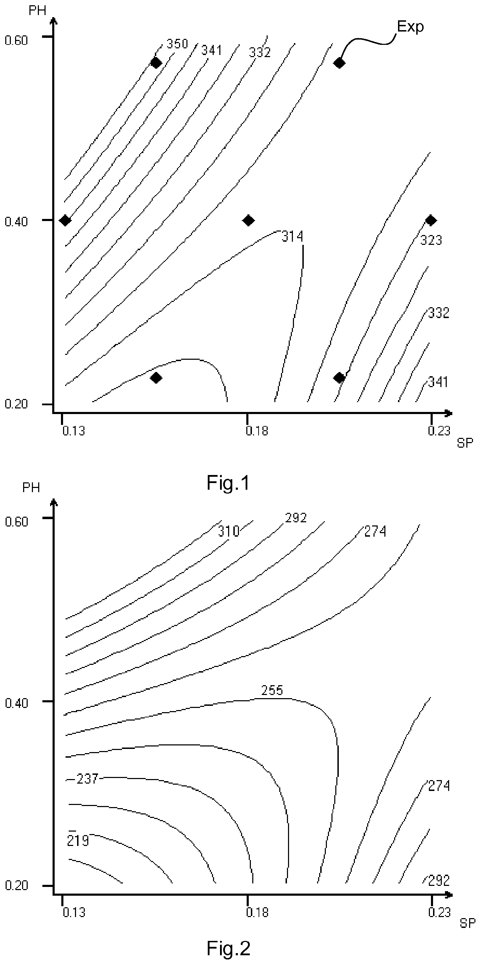

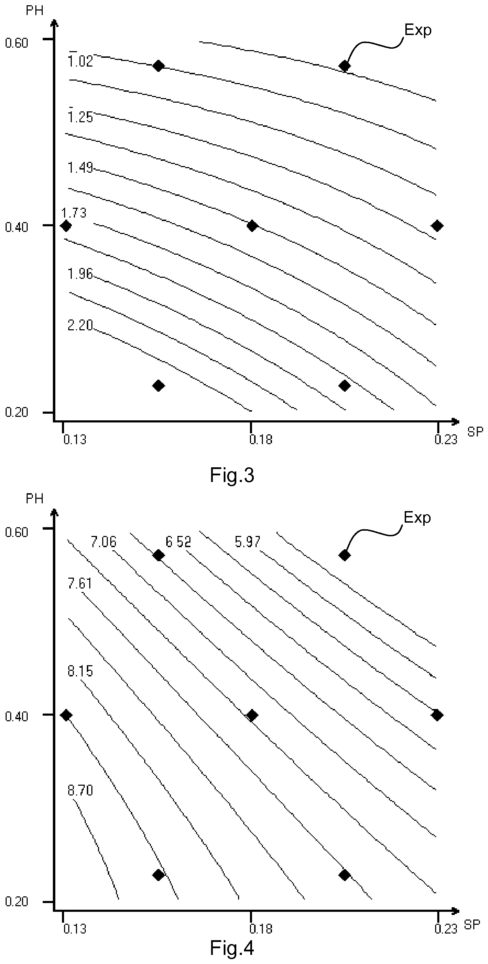

Les figures 1 et 2 représentent respectivement des courbes de niveaux de l'étalement du mortier selon un exemple de réalisation de l'invention en fonction des concentrations du premier superplastifiant SP et du second superplastifiant PH à 30 minutes et à 120 minutes. Les figures 3 et 4 représentent respectivement des courbes de niveaux de la résistance à la compression du mortier selon un exemple de réalisation en fonction des concentrations du premier superplastifiant SP et du second superplastifiant PH à 4 heures et à 24 heures. Aux figures 1, 3 et 4, les losanges désignés par la référence EXP représentent les points d'expérimentation du tableau 1.

Comme cela apparaît sur les figures 1 et 2, de façon avantageuse, l'étalement du mortier selon un exemple de réalisation reste supérieure à 210 mm à l'échéance de 2 heures quel que soit le mortier considéré. En outre, la présente invention permet de réduire la concentration en premier superplastifiant SP tout en conservant ou en augmentant les résistances à la compression RC à 6 heures.

La présente invention permet d'obtenir une durée d'ouvrabilité du mortier supérieure à 2 heures sans entraîner un retard pour l'acquisition des résistances aux jeunes âges. On obtient donc simultanément une durée d'ouvrabilité de 1h30 à 2 heures tout en conservant, voire en améliorant, la rapidité d'acquisition des résistances aux jeunes âges. Une explication serait que le premier superplastifiant participe de façon plus importante au retard d'acquisition des résistances aux jeunes âges que le second superplastifiant. De ce fait, la présente invention permettant de réduire la concentration du premier superplastifiant, la rapidité d'acquisition des résistances aux jeunes âges est conservée voire améliorée par rapport à un mortier ne comprenant que le premier superplastifiant en concentration plus importante. En outre, la présente invention permet néanmoins, grâce à l'action fluidifiante du second superplastifiant qui croît dans le temps, d'obtenir une durée d'ouvrabilité du mortier supérieure à 2 heures.

### 2) Influence de la nature du ciment pour la réalisation des bétons selon des exemples de réalisation de l'invention avec des ciments fabriqués en Europe par la société Lafarge

Pour la fabrication de béton dans les exemples qui suivent, on utilise la composition suivante, appelée composition F1 :

| | |
|---|---|
| Ciment Portland CEM I | 320 kg |
| Filler calcaire | 80 kg |
| Sable 0-4 du site St Bonnet de Mure | 840 kg |
| Gravillons1 4/10 du site St Bonnet de Mure | 520 kg |
| Gravillons2 11/22 du site St Bonnet de Mure | 440 kg |
| Eau | 158 l |

Le filler calcaire correspond au produit commercialisé par la société Omya sous l'appellation Betocarb P2.

Un béton de référence B1 et un exemple de réalisation d'un béton selon l'invention B2 sont réalisés avec la composition F1 en utilisant un ciment, produit par la société Lafarge à la cimenterie de Le Teil, ce ciment étant du type CEM1 52,5 R selon la norme EN 197-1.

Le béton de référence B1 est réalisé en ajoutant à la composition F1 les additifs suivants, les pourcentages étant exprimés par rapport au poids du ciment et du filler calcaire :

| | | |
|---|---|---|
| nitrite de calcium | | 1.6 % |
| formaldéhyde bisulfite de sodium | | 0.21 % |
| Superplastifiants : | CHRYSO Fluid Optima 203 | 0.25 % |
| | CHRYSO Plast 209 | 0.1 % |

Les produits CHRYSO Fluid Optima 203 et CHRYSO Plast 209 sont des superplastifiants commercialisés par la société Chryso.

Le béton B2 est réalisé en ajoutant à la composition F1 les additifs suivants, les pourcentages étant exprimés par rapport au poids du ciment et du filler calcaire :

| | |
|---|---|
| nitrite de calcium | 1.6 % |
| Premier superplastifiant SP : CHRYSO Fluid Optima 203 | 0.18 % |
| Second superplastifiant PH | 0.2 % |

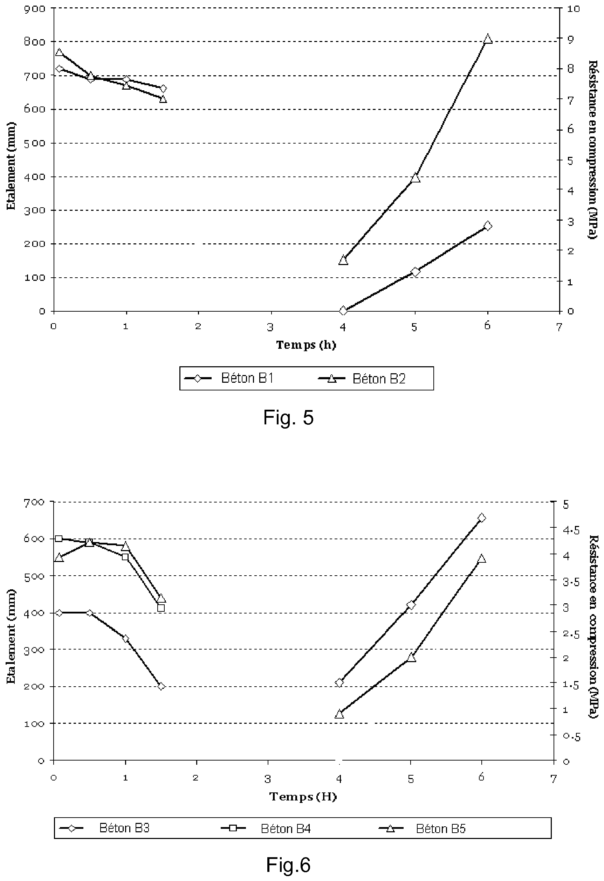

Les résultats obtenus à 20°C sont regroupés dans le tableau 2 ci-dessous et sont illustrés en figure 5.

**Tableau 2**

| Béton | Etalement (mm) | | | | RC (MPa) | | |
|---|---|---|---|---|---|---|---|
| | 5 min | 30 min | 60 min | 90 min | 4 h | 5 h | 6 h |
| B1 | 720 | 690 | 690 | 660 | 0 | 1.3 | 2.8 |
| B2 | 770 | 700 | 670 | 630 | 1.7 | 4.4 | 9 |

Pour un étalement du même ordre, le béton B2 selon l'invention contient une quantité moins importante du superplastifiant CHRYSO Fluid Optima 203 que le béton de référence B1. En outre, les résistances mécaniques à échéance de 6h du béton B2 sont nettement améliorées par rapport au béton B1.

Un béton de référence B3 et des bétons selon l'invention B4 et B5 sont réalisés avec la composition F1 en utilisant un ciment produit par la société Lafarge à la cimenterie de Saint Pierre La Cour, ce ciment étant du type CEM1 52,5 N selon la norme EN 197-1.

Le béton de référence B3 est réalisé en ajoutant à la composition F1 les additifs suivants, les pourcentages étant exprimés par rapport au poids du ciment et du filler calcaire :

| | |
|---|---|
| nitrite de calcium | 2.7 % |
| formaldéhyde bisulfite de sodium | 0.215 % |
| Superplastifiant B201F | 0.18 % |

Le produit B201F est un superplastifiant commercialisé par la société BASF.

Le béton B4 est réalisé en ajoutant à la composition F1 les additifs suivants, les pourcentages étant exprimés par rapport au poids du ciment et du filler calcaire :

| | |
|---|---|
| nitrite de calcium | 2.7 % |
| Premier superplastifiant SP : B201F | 0.18 % |
| Second superplastifiant PH | 0.12 % |

Le béton B5 est réalisé en ajoutant à la composition F1 les additifs suivants, les pourcentages étant exprimés par rapport au poids du ciment et du filler calcaire :

| | |
|---|---|
| nitrite de calcium | 2.7 % |
| Premier superplastifiant SP : Glenium 27 | 0.18 % |
| Second superplastifiant PH | 0.12 % |

Les résultats obtenus à 20°C sont regroupés dans le tableau 3 ci-dessous et sont illustrés en figure 6.

**Tableau 3**

| Béton | Etalement (mm) | | | | RC (MPa) | | |
|---|---|---|---|---|---|---|---|
| | 5 min | 30 min | 60 min | 90 min | 4 h | 5 h | 6 h |
| B3 | 400 | 400 | 330 | 200 | 1.5 | 3 | 4.7 |
| B4 | 600 | 590 | 550 | 410 | 0 | 1.6 | 3.1 |
| B5 | 550 | 590 | 580 | 440 | 0.9 | 2 | 3.9 |

Le béton B4 selon l'invention présente, à 90 min, un étalement supérieur à celui obtenu avec le béton B3, avec un écart de 210 mm pour un étalement de 410 mm. De même, le béton B5 selon l'invention présente, à 90 min, un étalement supérieur à celui obtenu avec le béton B3, avec un écart de 240 mm pour un étalement de 440 mm. Les résistances mécaniques en compression à échéance de 6h des bétons B4 et B5 sont du même ordre que celles du béton B3. En outre, pour un étalement du même ordre, les résistances mécaniques en compression du béton B5 (contenant comme premier superplastifiant SP le Glenium 27) sont supérieures à celles du béton B4 (contenant comme premier superplastifiant SP le B201F).

Un béton de référence B6 et un béton selon l'invention B7 sont réalisés avec la composition F1 en utilisant un ciment produit par la société Lafarge à la cimenterie de Cauldon (Grande-Bretagne), ce ciment étant du type CEM1 52,5 N selon la norme EN 197-1

Le béton de référence B6 est réalisé en ajoutant à la composition F1 les additifs suivants, les pourcentages étant exprimés par rapport au poids du ciment et du filler calcaire :

| | | |
|---|---|---|
| nitrite de calcium | | 2 % |
| formaldéhyde bisulfite de sodium | | 0.15 % |
| Superplastifiants : | CHRYSO Fluid Optima 206 | 0.27 % |
| | CHRYSO Plast 209 | 0.08 % |

Le produit CHRYSO Fluid Optima 206 est un superplastifiant commercialisé par la société Chryso.

Le béton B7 est réalisé en ajoutant à la composition F1 les additifs suivants, les pourcentages étant exprimés par rapport au poids du ciment et du filler calcaire :

| | |
|---|---|
| nitrite de calcium | 2 % |
| Premier superplastifiant SP : CHRYSO Fluid Optima 206 | 0.25 % |
| Second superplastifiant PH | 0.15 % |

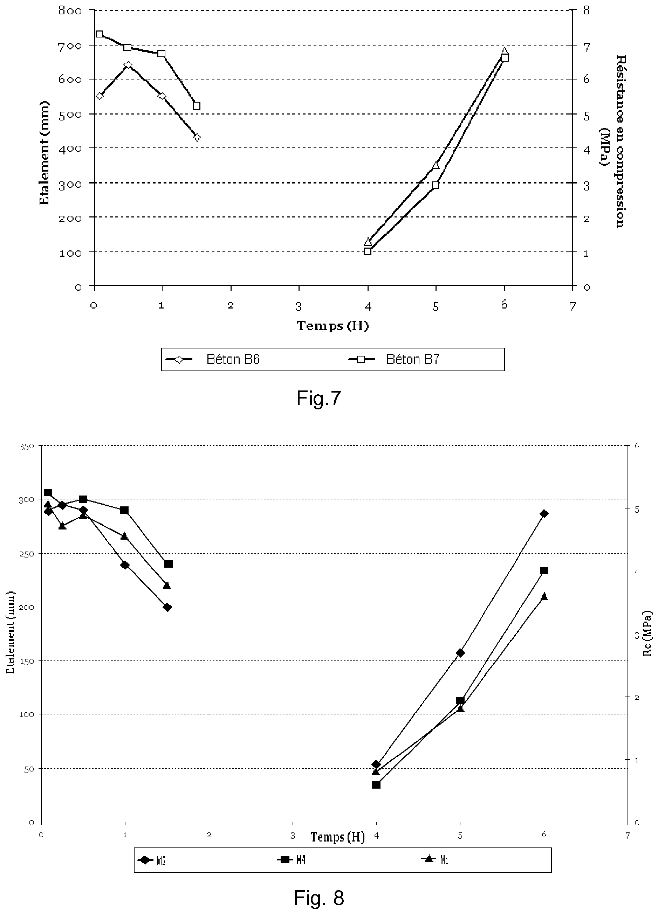

Les résultats obtenus à 20°C sont regroupés dans le tableau 4 ci-dessous et sont illustrés en figure 7.

**Tableau 4**

| Béton | Etalement (mm) | | | | RC (MPa) | | |
|---|---|---|---|---|---|---|---|
| | 5 min | 30 min | 60 min | 90 min | 4 h | 5 h | 6 h |
| B6 | 550 | 640 | 550 | 430 | 1.3 | 3.5 | 6.8 |
| B7 | 730 | 690 | 670 | 520 | 1 | 2.9 | 6.6 |

Le béton B7 selon l'invention présente, à 90 min, un étalement nettement supérieur à celui obtenu avec le béton B6, avec un écart de 90 mm pour un étalement de 520 mm. En outre, les résistances mécaniques à échéance de 6h du béton B7 sont du même ordre que celles du béton B6.

### 3) Influence de la nature du ciment pour la réalisation des bétons selon des exemples de réalisation de l'invention avec des ciments fabriqués hors Europe

Pour la fabrication des bétons B8 et B9, on utilise un ciment produit par la société Lafarge à la cimenterie de Richmond (Canada) et on utilise la composition suivante, appelée composition F2 :

| | |
|---|---|
| Ciment Portland CEM I | 340 kg/m3 |
| Cendre volante | 85 kg/m3 |
| Sable du site de Earle Creek | 820 kg/m3 |
| Gravillons1 5 mm du site de Earle Creek | 300 kg/m3 |
| Gravillons2 14 mm du site de Earle Creek | 380 kg/m3 |
| Gravillons3 20 mm du site de Earle Creek | 350 kg/m3 |
| Eau | 139 kg/m3 |

La cendre volante est produite par la société Sundance.

Le béton de référence B8 est réalisé en ajoutant à la composition F2 les additifs suivants, les pourcentages étant exprimés par rapport au poids du ciment et du filler calcaire :

| | | |
|---|---|---|
| nitrite de calcium | | 17.5 kg/m³ |
| formaldéhyde bisulfite de sodium | | 1.42 kg/m³ |
| Superplastifiants : | CHRYSO Fluid Optima 203 | 4.00 kg/m³ |
| | CHRYSO Fluid Optima 100 | 0.50 kg/m³ |

Le produit CHRYSO Fluid Optima 100 est un superplastifiant commercialisé par la société Chryso.

Le béton B9 est réalisé en ajoutant à la composition F2 les additifs suivants, les pourcentages étant exprimés par rapport au poids du ciment et du filler calcaire :

| | | |
|---|---|---|
| nitrite de calcium | | 17.5 kg/m³ |
| Premier superplastifiant SP : | CHRYSO Fluid Optima 203 | 3.00 kg/m³ |
| | CHRYSO Fluid Optima 100 | 0.38 kg/m³ |
| Second superplastifiant PH | | 1.89 kg/m³ |

Les résultats obtenus à 20°C sont regroupés dans le tableau 5 ci-après.

**Tableau 5**

| Béton | Etalement (mm) | | | | RC (MPa) | | |
|---|---|---|---|---|---|---|---|
| | Après mélange | 30 min | 60 min | 90 min | 4 h | 5 h | 6 h |
| B8 | 680 | 670 | 670 | 470 | 0.6 | 1.2 | 2.3 |
| B9 | 670 | 665 | 650 | 650 | 0.5 | 1 | 1.7 |

Le béton B9 selon l'invention présente, à 90 min, un étalement nettement supérieur à celui obtenu avec le béton B8, avec un écart d'au moins 180 mm pour un étalement de 650 mm. En outre, les résistances mécaniques à échéance de 6 h du béton B9 sont du même ordre que celles du béton B8.

Pour la fabrication de bétons B10 et B11, on utilise un ciment produit par la société Lafarge à la cimenterie de Exshaw (Canada) et on utilise la composition suivante, appelée composition F3 :

| | |
|---|---|
| Ciment Portland CEM I | 350 kg/m3 |
| Cendre volante | 85 kg/m3 |
| Sable du site de Calgary | 878 kg/m3 |
| Gravillons1 12.5 mm du site de Calgary | 438 kg/m3 |
| Gravillons2 20 mm du site de Calgary | 464 kg/m3 |
| Eau | 134 kg/m3 |

La cendre volante est produite par la société Sundance.

Le béton de référence B10 est réalisé en ajoutant à la composition F3 les additifs suivants, les pourcentages étant exprimés par rapport au poids du ciment et du filler calcaire :

| | |
|---|---|
| nitrite de calcium | 22.50 kg/m³ |
| formaldéhyde bisulfite de sodium | 1.42 kg/m³ |
| Superplastifiants : CHRYSO Fluid Optima 203 | 4.00 kg/m³ |
| CHRYSO Fluid Optima 100 | 0.50 kg/m³ |

Le béton B11 est réalisé en ajoutant à la composition F3 les additifs suivants, les pourcentages étant exprimés par rapport au poids du ciment et du filler calcaire :

| | | |
|---|---|---|
| nitrite de calcium | | 22.5 kg/m³ |
| Premier superplastifiant SP : | CHRYSO Fluid Optima 203 | 3.00 kg/m³ |
| | CHRYSO Fluid Optima 100 | 0.38 kg/m³ |
| Second superplastifiant PH | | 1.89 kg/m³ |

Les résultats obtenus à 20°C sont regroupés dans le tableau 6 ci-après.

**Tableau 6**

| Béton | Etalement (mm) | | | | RC (MPa) | | |
|---|---|---|---|---|---|---|---|
| | Après mélange | 30 min | 60 min | 90 min | 4 h | 5 h | 6 h |
| B10 | 625 | 640 | 620 | 480 | 0.9 | 1.8 | 3.7 |
| B11 | 685 | 640 | 640 | 540 | 0.4 | 1.5 | 3.8 |

Le béton B11 selon l'invention présente, à 90 min, un étalement nettement supérieur à celui obtenu avec le béton B10, avec un écart de 60 mm pour un étalement de 540 mm. En outre, les résistances mécaniques à échéance de 6 h du béton B11 sont du même ordre que celles du béton B10.

Pour la fabrication des bétons B12 et B13, on utilise un ciment produit par la société Lafarge à la cimenterie de Richmond (Canada) et on utilise la composition suivante, appelée composition F4 :

| | |
|---|---|
| Ciment Portland CEM I | 340 kg/m3 |
| Cendre volante | 85 kg/m3 |
| Sable | 834 kg/m3 |
| Gravillons1 5 mm | 317 kg/m3 |
| Gravillons2 14 mm | 391 kg/m3 |
| Gravillons3 20 mm | 284 kg/m3 |
| Eau | 134 kg/m3 |

La cendre volante est produite par la société Sundance. Le sable et les gravillons1, gravillons2 et gravillons3 sont produits par la société Cewe.

Le béton de référence B12 est réalisé en ajoutant à la composition F4 les additifs suivants, les pourcentages étant exprimés par rapport au poids du ciment et du filler calcaire :

| | | |
|---|---|---|
| nitrite de calcium | | 17.50 kg/m³ |
| formaldéhyde bisulfite de sodium | | 1.42 kg/m³ |
| Superplastifiants : | CHRYSO Fluid Optima 203 | 4.00 kg/m³ |
| | CHRYSO Fluid Optima 100 | 0.50 kg/m³ |

Le béton B13 est réalisé en ajoutant à la composition précédente les additifs suivants, les pourcentages étant exprimés par rapport au poids du ciment et du filler calcaire :

| | | |
|---|---|---|
| nitrite de calcium | | 22.5 kg/m³ |
| Premier superplastifiant SP : | CHRYSO Fluid Optima 203 | 3.00 kg/m³ |
| | CHRYSO Fluid Optima 100 | 0.38 kg/m³ |
| Second superplastifiant PH | | 1.89 kg/m³ |

Les résultats obtenus à 20°C sont regroupés dans le tableau 7 ci-après.

**Tableau 7**

| Béton | Affaissement (mm) | | | | | RC (MPa) | | |
|---|---|---|---|---|---|---|---|---|
| | Après mélange | 30 min | 60 min | 90 min | 120 min | 4 h | 5 h | 6 h |
| B12 | 270 | 265 | 250 | 220 | x | 1 | 1.7 | 3.8 |
| B13 | 280 | 275 | 275 | 275 | 255 | 0.6 | 1.2 | 2.7 |

Le béton B13 selon l'invention présente, à 90 min, un affaissement nettement supérieur à celui obtenu avec le béton B12, avec un écart de 55 mm pour un affaissement de 275 mm. En outre, le béton B13 selon l'invention présente, à 120 min, un affaissement de 255 mm. De plus, les résistances mécaniques à échéance de 6 h du béton B13 sont du même ordre que celles du béton B12.

Pour la fabrication de bétons B14 et B15, on utilise un ciment produit par la société Lafarge à la cimenterie de Lehigh et on utilise la composition F4.

Le béton de référence B14 est réalisé en ajoutant à la composition précédente les additifs suivants, les pourcentages étant exprimés par rapport au poids du ciment et du filler calcaire :

| | | |
|---|---|---|
| nitrite de calcium | | 20.00 kg/m³ |
| formaldéhyde bisulfite de sodium | | 1.42 kg/m³ |
| Superplastifiants : | CHRYSO Fluid Optima 203 | 4.00 kg/m³ |
| | CHRYSO Fluid Optima 100 | 0.50 kg/m³ |

Le béton B15 est réalisé en ajoutant à la composition précédente les additifs suivants, les pourcentages étant exprimés par rapport au poids du ciment et du filler calcaire :

| | | |
|---|---|---|
| nitrite de calcium | | 20.00 kg/m³ |
| Premier superplastifiant SP : | CHRYSO Fluid Optima 203 | 3.00 kg/m³ |
| | CHRYSO Fluid Optima 100 | 0.38 kg/m³ |
| Second superplastifiant PH | | 1.89 kg/m³ |

Les résultats obtenus à 20°C sont regroupés dans le tableau 8 ci-après.

**Tableau 8**

| Béton | Etalement (mm) | | | | RC (MPa) | | |
|---|---|---|---|---|---|---|---|
| | Après mélange | 30 min | 60 min | 90 min | 4 h | 5 h | 6 h |
| B14 | 680 | 670 | 590 | 360 | 0.6 | 1.7 | 2.9 |
| B15 | 670 | 670 | 650 | 400 | 0.9 | 2.5 | 3.3 |

Le béton B15 selon l'invention présente, à 90 min, un étalement nettement supérieur à celui obtenu avec le béton B10, avec un écart de 40 mm pour un étalement de 400 mm. En outre, les résistances mécaniques à échéance de 6 h du béton B15 sont légèrement supérieures à celles du béton B14.

Les exemples décrits précédemment en relation avec les tableaux 4 à 8 montrent que, toutes conditions égales par ailleurs, le liant hydraulique selon l'invention permet la fabrication d'un béton ayant une longue durée de maintien d'ouvrabilité et conduisant à une acquisition rapide des résistances mécaniques à court terme indépendamment de la source d'approvisionnement en ciment.

### 4) Influence de la nature du premier superplastifiant

On réalise un mortier de béton équivalent à un béton ayant la composition F1. La détermination d'un mortier de béton équivalent est décrite dans l'article intitulé « La méthode du mortier de béton équivalent (MBE)-Un nouvel outil d'aide à la formulation des bétons adjuvantés » aux noms de A. Schwarzentruber et C. Catherine et publié dans la revue Materials and Structures Volume 33/Number 8, Octobre 2000.

La formulation du mortier est la suivante pour la réalisation d'un litre de mortier :

| | |
|---|---|
| Ciment Portland CEM I | 498.2 g |
| Filler calcaire | 124.6 g |
| Sable 0-5 | 1372.0 g |
| Eau totale | 259.2 g |

Des mortiers M1 à M6 sont réalisés avec un ciment produit par la société Lafarge à la cimenterie de Saint Pierre La Cour, ce ciment étant du type CEM1 52,5 N selon la norme EN 197-1. On appelle SET le nitrite de calcium et FOR le formaldéhyde bisulfite de sodium.

Différents essais sont réalisés et regroupés dans le tableau 9 suivant. Pour les mortiers M2, M4 et M6, ces essais sont, en outre, illustrés en figure 8 :

**Tableau 9**

| Mortier | SET % | FOR % | PH % | SP | SP % | Affaissement (mm) | | | | | RC (MPa) | | |
|---|---|---|---|---|---|---|---|---|---|---|---|---|---|
| | | | | | | 5 min | 10 min | 30 min | 60 min | 90 min | 4 h | 5 h | 24 h |
| M1 | 2.7 | 0.225 | 0 | B201F | 0.18 | 200 | 200 | 200 | 160 | - | 2.2 | 5.1 | 7.9 |
| M2 | 2.7 | 0 | 0.12 | B201F | 0.18 | 290 | 295 | 290 | 240 | 200 | 0.9 | 2.7 | 4.9 |
| M3 | 2.7 | 0 | 0.15 | CHRYSO Fluid Optima 203 | 0.17 | 310 | 320 | 320 | 285 | 225 | 1.5 | 3.7 | 6.6 |
| M4 | 2 | 0 | 0.15 | CHRYSO Fluid Optima 203 | 0.17 | 305 | 295 | 300 | 290 | 240 | 0.8 | 1.8 | 3.6 |
| M5 | 2 | 0 | 0.15 | CHRYSO Fluid Optima 206 | 0.15 | 290 | 270 | 275 | 240 | 180 | 1.1 | 2.9 | 5.2 |
| M6 | 1.8 | 0 | 0.15 | CHRYSO Fluid Optima 206 | 0.15 | 295 | 275 | 285 | 265 | 220 | 0.6 | 1.9 | 4 |

Des mortiers M7 à M14 sont réalisés avec un ciment produit par la société Lafarge à la cimenterie de Le Teil, ce ciment étant du type CEM1 52,5 R selon la norme EN 197-1.

De façon avantageuse, le mortier M6 comprend une plus faible concentration de nitrite de calcium que le mortier de référence M1 tout en présentant les mêmes performances mécaniques que le mortier de référence M1.

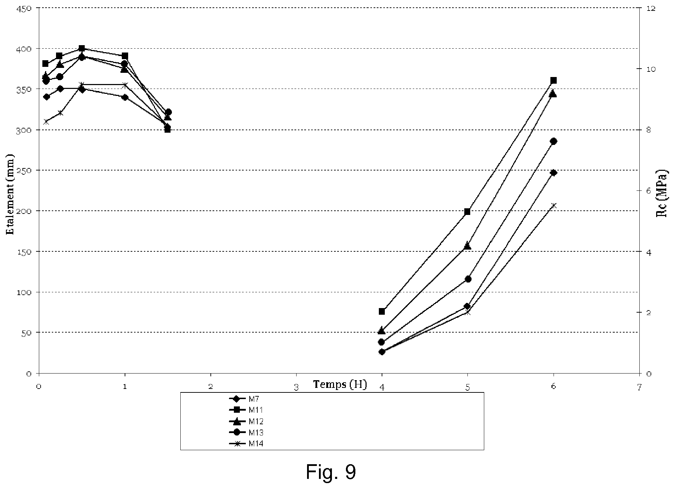

Différents essais sont réalisés et sont regroupés dans le tableau 10 suivant. On appelle SP1 le produit CHRYSO Fluid Optima 203 et SP2 le produit CHRYSO Plast 209. Pour les mortiers M7, M11, M12, M13 et M14, ces essais sont illustrés en figure 9.

De façon avantageuse, le mortier M14 comprend une plus faible concentration de nitrite de calcium que le mortier de référence M7 tout en présentant les mêmes performances mécaniques que le mortier de référence M7.

**Tableau 10**

| Mortier | SET % | FOR % | PH % | SP1 % | SP2 % | Affaissement en mm | | | | | RC en MPa | | |
|---|---|---|---|---|---|---|---|---|---|---|---|---|---|
| | | | | | | 5 min | 10 min | 30 min | 60 min | 90 min | 4 h | 5 h | 24 h |
| M7 | 1.6 | 0.21 | 0 | 0.25 | 0.1 | 340 | 350 | 350 | 340 | 305 | 0.7 | 2.2 | 6.6 |
| M8 | 1.6 | 0 | 0.2 | 0.18 | | 400 | 410 | 400 | 390 | 375 | 1.9 | 6.9 | 11 |
| M9 | 1.6 | 0 | 0.1 | 0.18 | | 380 | 370 | 380 | 340 | 205 | 2.2 | 6.4 | 9.7 |
| M10 | 1.4 | 0 | 0.1 | 0.18 | | 390 | 370 | 360 | 310 | 200 | 1.9 | 6.1 | 9.9 |
| M11 | 1.4 | 0 | 0.15 | 0.15 | | 380 | 390 | 400 | 390 | 300 | 2 | 5.3 | 9.6 |
| M12 | 1.2 | 0 | 0.15 | 0.15 | | 365 | 380 | 390 | 375 | 315 | 1.4 | 4.2 | 9.2 |
| M13 | 1 | 0 | 0.15 | 0.13 | | 360 | 365 | 390 | 380 | 320 | 1 | 3.1 | 7.6 |
| M14 | 1 | 0 | 0.15 | 0.13 | 0.05 | 310 | 320 | 355 | 355 | 305 | 0.7 | 2 | 5.5 |

## Revendications

1. Mélange accélérateur pour liant hydraulique comprenant :
- au moins un premier superplastifiant comprenant des chaînes latérales reliées à une chaine principale, moins de 10% des chaînes latérales se séparant de la chaîne principale en milieu basique à 20°C ;
- un sel de calcium hydrosoluble, présent en des quantités comprises entre 50 et 90% en poids sec (pourcentages calculés à partir des extraits secs des costituants du mélange accélérateur) ; et
- au moins un second superplastifiant différent du premier superplastifiant, comprenant une chaîne principale et des groupes pendants reliés à la chaîne principale, au moins 10% des chaînes latérales se séparant de la chaîne principale en milieu basique à 20°C, , ledit second superplastifiant comprenant au moins un polymère hydrolysable en milieu basique choisi parmi les polymères hydrolysables obtenus soit par polymérisation radicalaire :
• d'au moins un monomère ionique ou ionisable du type phosphonique, sulfonique ou carboxylique ;
• d'au moins un monomère de type (méth)acrylate de polyéthylène glycol (PEG), maléate de polyéthylène glycol, vinyl éther de polyéthylène glycol ou allyle de polyéthylène glycol, en particulier PEG méthyl éther (en position terminale), dont le poids moléculaire est compris par exemple entre 100 et 10000 ; et
• éventuellement un ou plusieurs autres monomères hydrolysables ou non hydrolysables ;
Les monomères hydrolysables représentant 5 à 95% molaire de l'ensemble des monomères mis en oeuvre
soit de manière équivalente par un procédé dit de post-estérification en faisant réagir des alcools ou des amines polyoxyalkylés sur un polymère présentant des fonctions carboxyliques pour permettre le greffage.

2. Mélange accélérateur selon la revendication 1, dans lequel le polymère hydrolysable est du type polycarboxylate de polyoxyde d'alkylène comprenant des unités monomère hydrolysables représentant de 5 % à 95 % molaire de l'ensemble des unités monomère du polymère hydrolysable, de préférence de 10 % à 60 % molaire de l'ensemble des unités monomère du polymère hydrolysable.

3. Mélange accélérateur selon la revendication 2, dans lequel les monomères hydrolysables sont choisis parmi l'acrylamide et ses dérivés, l'acrylonitrile et ses dérivés, les acrylates d'alkyle, les acrylates d'hydroxyalkyle, les acrylates de polyéthylène glycol, les anhydrides carboxyliques copolymérisables et les imides copolymérisables.

4. Mélange accélérateur selon l'une quelconque des revendications 1 à 3, dans lequel le polymère hydrolysable est du type polycarboxylate de polyoxyde d'alkylène.

5. Mélange accélérateur selon l'une quelconque des revendications 1 à 4, dans lequel le premier superplastifiant est du type polycarboxylate de polyoxyde d'alkylène.

6. Mélange accélérateur selon l'une quelconque des revendications 1 à 5, dans lequel le sel de calcium est le nitrite de calcium.

7. Mélange accélérateur selon l'une quelconque des revendications 1 à 6, dans lequel le second superplastifiant comprend des chaînes latérales reliées à une chaîne principale, au moins 20 % des chaînes latérales se séparant de la chaîne principale en milieu basique à 20°C, encore plus préférentiellement au moins 30 % des chaînes latérales se séparant de la chaîne principale en milieu basique à 20°C.

8. Liant hydraulique rapide comprenant :
- du ciment ;
- au moins un mélange accélérateur selon l'une quelconque des revendications 1 à 7.

9. Liant selon la revendication 8, comprenant, par rapport au poids sec du liant :
- 99.5 à 90 %, de préférence de 99 à 95 % en poids de ciment ;
- 0.5 à 10 %, de préférence de 1 à 5 % en poids des composants considérés ensemble :
- dudit au moins premier superplastifiant
- dudit sel de calcium ; et
- dudit au moins second superplastifiant.

10. Liant selon l'une quelconque des revendications 8 ou 9, dans lequel la quantité de sel de calcium dans le liant est comprise entre 0.5 et 10 %, de préférence entre 1.5 et 5 % en poids par rapport au liant.

11. Liant selon l'une quelconque des revendications 8 à 10, dans lequel la quantité du second superplastifiant, considérée en extrait sec, par rapport au sel de calcium, est comprise entre 1 et 10 % de la quantité de sel de calcium, de préférence entre 2 et 5 %.

12. Liant selon l'une quelconque des revendications 8 à 11 ne comprenant pas de dérivé formique.

13. Béton comprenant un liant hydraulique selon l'une des revendications 8 à 12 gâché avec de l'eau.

## Patentansprüche

1. Beschleunigungsgemisch für hydraulisches Bindemittel, aufweisend:
- mindestens einen ersten Superweichmacher, der Seitenketten aufweist, die mit einer Hauptkette verbunden sind, wobei sich in einem basischen Medium bei 20°C weniger als 10% der Seitenketten von der Hauptkette trennen,
- ein wasserlösliches Calciumsalz, das in Mengen zwischen 50 und 90 Trockengewichts-% (prozentuale Anteile, die ausgehend von Trockenextrakten der Bestandteile des Beschleunigungsgemischs berechnet werden) vorliegt, und
- mindestens einen zweiten Superweichmacher, der sich von dem ersten Superweichmacher unterscheidet, der eine Hauptkette und Seitengruppen aufweist, die mit der Hauptkette verbunden sind, wobei sich mindestens 10% der Seitenketten in einem basischen Medium bei 20°C von der Hauptkette trennen, wobei der zweite Superweichmacher mindestens ein wasserlösliches Polymer in basischem Medium aufweist, das aus wasserlöslichen Polymeren ausgewählt ist, die erhalten werden durch Radikalpolymerisation von entweder:
• mindestens einem ionischen oder ionisierbaren Monomer des Phospon-, Sulfon- oder Carboxy-Typs,
• mindestens einem Monomer des Polyethylenglycol- (PEG) (meth)acrylat-, Polyethylenglycolmaleat-, Polyethylenglycolvinylether- oder Polyethylenglycolallyl-, insbesondere des (endständigen) PEG-Methylether-Typs, dessen Molekulargewicht zum Beispiel zwischen 100 und 10000 liegt, und
• gegebenenfalls einem oder mehreren anderen wasserlöslichen oder nicht wasserlöslichen Monomeren,
wobei die wasserlöslichen Monomere 5 bis 95 Mol-% der Gesamtheit der Monomere repräsentieren, die in äquivalenter Weise durch ein als Nachveresterung bezeichnetes Verfahren eingesetzt werden, indem Alkohole oder Polyoxyalkylamine auf einem Polymer umgesetzt werden, das Carboxy-Funktionen aufweist, um das Aufpfropfen zu ermöglichen.

2. Beschleunigungsgemisch gemäß Anspruch 1, wobei das wasserlösliche Polymer vom Alkylenpolyoxidpolycarboxylat-Typ ist, aufweisend wasserlösliche Monomereinheiten, die 5 Mol-% bis 95 Mol-% der Gesamtheit der Monomereinheiten des wasserlöslichen Polymers, vorzugsweise 10 Mol-% bis 60 Mol-% der Gesamtheit der Monomereinheiten des wasserlöslichen Polymers repräsentieren.

3. Beschleunigungsgemisch gemäß Anspruch 2, wobei die wasserlöslichen Monomere ausgewählt sind aus Acrylamid und seinen Derivaten, Acrylnitril und seinen Derivaten, Alkylacrylaten, Hydroxyalkylacrylaten, Polyethylenglycolacrylaten, copolymerisierbaren Carboxyanhydriden und copolymerisierbaren Imiden ausgewählt sind.

4. Beschleunigungsgemisch gemäß irgendeinem der Ansprüche 1 bis 3, wobei das wasserlösliche Polymer vom Alkylenpolyoxid-Polycarboxylat-Typ ist.

5. Beschleunigungsgemisch gemäß irgendeinem der Ansprüche 1 bis 4, wobei der erste Superweichmacher vom Alkylenpolyoxid-Polycarboxylat-Typ ist.

6. Beschleunigungsgemisch gemäß irgendeinem der Ansprüche 1 bis 5, wobei das Calciumsalz Calciumnitrit ist.

7. Beschleunigungsgemisch gemäß irgendeinem der Ansprüche 1 bis 6, wobei der zweite Superweichmacher Seitenketten aufweist, die mit einer Hauptkette verbunden sind, wobei sich mindestens 20% der Seitenketten in einem basischen Medium bei 20°C von der Hauptkette trennen, wobei sich noch bevorzugter mindestens 30% der Seitenketten in einem basischen Medium bei 20°C von der Hauptkette trennen.

8. Hydraulisches Schnellbindemittel, aufweisend:
- Zement,
- mindestens ein Beschleunigungsgemisch gemäß irgendeinem der Ansprüche 1 bis 7.

9. Bindemittel gemäß Anspruch 8, aufweisend, bezogen auf das Trockengewicht des Bindemittels:
- 99,5 bis 90 Gew.-%, vorzugsweise 99 bis 95 Gew.-% Zement,
- 0,5 bis 10 Gew.-%, vorzugsweise 1 bis 5 Gew.-% der gemeinsam betrachteten Komponenten:
- des mindestens ersten Superweichmachers,
- des Calciumsalzes und
- des mindestens zweiten Superweichmachers.

10. Bindemittel gemäß irgendeinem der Ansprüche 8 oder 9, wobei die Menge an Calciumsalz in dem Bindemittel zwischen 0,5 und 10 Gew.-%, vorzugsweise zwischen 1,5 und 5 Gew.-% bezogen auf das Bindemittel beträgt.

11. Bindemittel gemäß irgendeinem der Ansprüche 8 bis 10, wobei die Menge an dem zweiten Superweichmacher, betrachtet als Trockenextrakt, bezogen auf das Calciumsalz, zwischen 1 und 10 % der Menge an Calciumsalz, vorzugsweise zwischen 2 und 5 % beträgt.

12. Bindemittel gemäß irgendeinem der Ansprüche 8 bis 11, das kein Ameisensäurederivat enthält.

13. Beton, aufweisend ein hydraulisches Bindemittel gemäß einem der Ansprüche 8 bis 12, mit Wasser angemacht.

## Claims

1. Accelerator mixture for a hydraulic binder, comprising:
- at least a first superplasticiser comprising side chains connected to a main chain, less than 10% of the side chains separating from the main chain in basic medium at 20°C;
- a water-soluble calcium salt, present in quantities of between 50 and 90% by dry weight (percentages calculated from the dry extracts of the constituents of the accelerator mixture); and
- at least a second superplasticiser which is different from the first superplasticiser, comprising a main chain and pendant groups connected to the main chain, at least 10% of the side chains separating from the main chain in basic medium at 20°C, said second superplasticiser comprising at least one polymer which is hydrolysable in basic medium selected from the hydrolysable polymers obtained either by radical polymerisation:
• of at least one ionic or ionisable monomer of the phosphonic, sulfonic or carboxylic type;
• of at least one monomer of the type polyethylene glycol (PEG) (meth)acrylate, polyethylene glycol maleate, polyethylene glycol vinyl ether or polyethylene glycol allyl, in particular PEG methyl ether (in the terminal position), the molecular weight of which is, for example, between 100 and 10,000; and
• optionally one or more other hydrolysable or non-hydrolysable monomers; the hydrolysable monomers representing from 5 to 95% molar of the totality of the monomers used,
or in an equivalent manner by a so-called post-esterification process by reacting alcohols or polyoxyalkylated amines with a polymer having carboxylic functions in order to permit grafting.

2. Accelerator mixture according to claim 1, wherein the hydrolysable polymer is of the polyalkylene oxide polycarboxylate type comprising hydrolysable monomer units representing from 5% to 95% molar of the totality of the monomer units of the hydrolysable polymer, preferably from 10% to 60% molar of the totality of the monomer units of the hydrolysable polymer.

3. Accelerator mixture according to claim 2, wherein the hydrolysable monomers are chosen from acrylamide and its derivatives, acrylonitrile and its derivatives, alkyl acrylates, hydroxyalkyl acrylates, polyethylene glycol acrylates, copolymerisable carboxylic anhydrides and copolymerisable imides.

4. Accelerator mixture according to any one of claims 1 to 3, wherein the hydrolysable polymer is of the polyalkylene oxide polycarboxylate type.

5. Accelerator mixture according to any one of claims 1 to 4, wherein the first superplasticiser is of the polyalkylene oxide polycarboxylate type.

6. Accelerator mixture according to any one of claims 1 to 5, wherein the calcium salt is calcium nitrite.

7. Accelerator mixture according to any one of claims 1 to 6, wherein the second superplasticiser comprises side chains connected to a main chain, at least 20% of the side chains separating from the main chain in basic medium at 20°C, yet more preferably at least 30% of the side chains separating from the main chain in basic medium at 20°C.

8. Rapid hydraulic binder comprising:
- cement;
- at least one accelerator mixture according to any one of claims 1 to 7.

9. Binder according to claim 8, comprising, based on the dry weight of the binder:
- from 99.5 to 90%, preferably from 99 to 95% by weight cement;
- from 0.5 to 10%, preferably from 1 to 5% by weight of the components considered together:
- of said at least first superplasticiser;
- of said calcium salt; and
- of said at least second plasticiser.

10. Binder according to either claim 8 or claim 9, wherein the quantity of calcium salt in the binder is between 0.5 and 10%, preferably between 1.5 and 5% by weight, based on the binder.

11. Binder according to any one of claims 8 to 10, wherein the quantity of the second superplasticiser, considered as dry extract, based on the calcium salt, is between 1 and 10% of the quantity of calcium salt, preferably between 2 and 5%.

12. Binder according to any one of claims 8 to 11 not comprising a formic derivative.

13. Concrete comprising a hydraulic binder according to any one of claims 8 to 12 mixed with water.
